# EUROPÄISCHE PATENTSCHRIFT

(11) **EP 3 728 674 B1**
(45) Veröffentlichungstag und Bekanntmachung des Hinweises auf die Patenterteilung: **27.11.2024**
(21) Anmeldenummer: 18826318.0
(22) Anmeldetag: 19.12.2018
(51) Int. Cl.: C22C 38/02, C21D 6/02, C21D 6/00, C22C 38/50, C22C 38/44, C22C 38/42, C22C 38/06, C22C 38/04, C22C 38/40, C21D 1/30

(54) **VERFAHREN ZUM HERSTELLEN EINES GEGENSTANDS AUS EINEM MARAGING-STAHL**
METHOD OF MANUFACTURING AN ARTICLE FROM A MARAGING STEEL
PROCEDE DE FABRICATION D'UN ARTICLE EN ACIER MARAGING

(30) Priorität: 22.12.2017 DE 102017131219
(43) Veröffentlichungstag der Anmeldung: 28.10.2020
(73) Patentinhaber: voestalpine BÖHLER Edelstahl GmbH & Co KG, 8605 Kapfenberg (AT)
(72) Erfinder: SCHNITZER, Ronald, 8700 Leoben (AT); LEITNER, Harald, 8641 St. Marein im Mürztal (AT)
(74) Vertreter: WSL Patentanwälte Partnerschaft mbB
(86) Internationale Anmeldenummer: PCT/EP2018/085765
(87) Internationale Veröffentlichungsnummer: WO 2019/121866

(56) Entgegenhaltungen:
- EP-A1- 2 546 383
- EP-A1- 2 617 856
- EP-A2- 2 682 484
- EP-B1- 2 546 383
- EP-B1- 2 682 484
- DE-A1- 3 427 602
- DE-T2- 69 115 356
- JP-A- H02 310 339
- US-B1- 6 238 455

## Beschreibung

Die vorliegende Erfindung betrifft ein Verfahren zum Herstellen eines Gegenstands aus einem Maraging-Stahl nach dem Oberbegriff des Anspruchs 1 sowie ein Gegenstand aus einem Maraging-Stahl. Ein weiterer Aspekt der Erfindung betrifft einen Maraging-Stahl.

Bei den sogenannten Maraging-Stählen handelt es sich um Stähle, deren Legierung nahezu kohlenstofffrei ist.

Die Maraging-Stähle sind einerseits hochfest und besitzen andererseits eine gute Zähigkeit bei guten Verarbeitungs- und Schweißeigenschaften. Sie werden als Werkzeugstähle für Anwendung bei erhöhter Temperatur, z. B. bei formschwierigen Druckguss- oder Spritzgusswerkzeugen also insgesamt Kunststoffwerkzeugen sowie für die Herstellung von Messern und Klingen für das Sportfechten verwendet.

Beispiele für Maraging-Stähle sind beispielsweise die Warmarbeitsstähle 1.2709 und 1.6356. Aus der DE 603 19 197 T2 ist ein Maraging-Stahl bekannt, der höchstens 0,01 % C, 8 bis 22 % Nickel, 5 bis 20 % Cobalt, 2 bis 9 % Molybdän, zwischen 0 und 2 % Titan maximal 1,7 % Aluminium, Magnesium zwischen 0 und 10 ppm, Sauerstoff weniger als 10 ppm, Stickstoff weniger als 15 ppm, Rest Eisen und zufällige Verunreinigungen besitzt, wobei dieser Maraging-Stahl Nitrideinschlüsse mit einer maximalen Länge von 15 µm und Oxideinschlüsse mit einer maximalen Länge von 20 µm enthält, wobei die Oxideinschlüsse Einschlüsse des Spinelltyps und Aluminium Oxideinschlüsse enthält und der Anteil an Einschlüssen des Spinelltyps mit einer Länge von mindestens 10 µm am Gesamtgehalt der Einschlüsse des Spinelltyps mit einer Länge von mindestens 10 µm und Al₂O₃ mit einer Länge von 10 µm größer ist als 0,33. Dies soll der Aufgabe Rechnung tragen, die nicht-metallischen Einschlüsse deutlich zu reduzieren.

Aus der EP 1 222 317 B1 ist ein hochfester rostfreier Automatenstahl bekannt, wobei dieser pulvermetallurgisch hergestellt wird und eine ausscheidungshärtbare Edelstahllegierung enthalten soll, wobei diese Legierung maximal 0,03 % Kohlenstoff, maximal 1 % Mangan, maximal 0,75 % Silizium, maximal 0,04 % Phosphor, 0,01 bis 0,05 % Schwefel ,10 bis 14 % Chrom, 6 bis 12 % Nickel, maximal 6 % Molybdän, maximal 4 % Kupfer, 0,4 bis 2,5 % Titan und weitere geringe Zulegierungen enthält, wobei der Rest Eisen und die üblichen Verunreinigungen sein sollen, wobei hieraus ein pulvermetallurgisches Produkt hergestellt werden soll, welches einer feinen Dispersion winziger Sulfitteilchen enthalten sollen, deren Hauptabmessung nicht größer als 5 µm ist. Ebenso kann hieraus ein Draht hergestellt werden.

Aus der EP 0 607 263 B1 ist ein ausscheidungshärtbarer martensitischer Stahl bekannt, der neben den üblichen geringer zulegierten Metallen 10 bis 14 % Chrom, 7 bis 11 % Nickel, 2,5 bis 6 % Molybdän und 0,5 bis 4 % Kupfer enthält, dabei können bis zu 9 % Cobalt enthalten sein, wobei der Rest aus Eisen und üblichen Verunreinigungen besteht.

Aus der EP 2 631 432 B1 ist ein Dampfturbinenrotor, eine korrespondierende Dampfturbine und ein Turbinenkraftwerk bekannt, wobei der Dampfturbinenrotor eine Dampfturbinenniederdruckentstufenlangschaufel ist, die aus einem ausscheidungshärtenden martensitischen Edelstahl gebildet ist, der weniger als 0,1 & Kohlenstoff enthält und 9 bis 14 % Chrom sowie 9 bis 14 % Nickel, 0,5 bis 2,5 % Molybdän, 0,5 % oder weniger Silizium besitzt.

Die JPH02310339A und die US6238455B1 offenbaren ebenfalls ausscheidungshärtbare martensitische Stahlzusammensetzungen.

Aufgabe der Erfindung ist es ein Verfahren zum Herstellen eines Gegenstands aus einem Maraging-Stahl zu schaffen, bei dem ein optimales Härte-Zähigkeitsverhältnis ermöglicht wird.

Die Aufgabe wird mit den Merkmalen des Anspruchs 1 gelöst.

Vorteilhafte Weiterbildungen sind in den hiervon abhängigen Unteransprüchen gekennzeichnet.

Es ist eine weitere Aufgabe der Erfindung, einen Maraging-Stahl zu schaffen, bei dem ein optimales Härte-Zähigkeitsverhältnis ermöglicht wird.

Die Aufgabe wird mit dem Maraging-Stahl mit den Merkmalen des Anspruchs 5 gelöst.

Es ist eine weitere Aufgabe, einen Gegenstand aus einem Maraging-Stahl zu schaffen, bei dem ein optimales Härte-Zähigkeitsverhältnis ermöglicht wird.

Die Aufgabe wird mit einem Gegenstand mit den Merkmalen des Anspruchs 6 gelöst.

Vorteilhafte Weiterbildungen sind in den hiervon abhängigen Unteransprüchen gekennzeichnet.

Bei den Maraging-Stählen nach dem Stand der Technik sind entweder eine hohe Härte oder eine hohe Zähigkeit erzielbar. Eine hohe Zähigkeit ist insbesondere dann möglich, wenn durch die Auslagerung ein hoher Teil von rückumgewandeltem Austenit ermöglicht wird. Dieser Anteil von rückumgewandelten Austenit hat jedoch wiederum einen negativen Einfluss auf die maximal erzielbare Härte.

Erfindungsgemäß wurde ein Legierungskonzept gefunden, welches bei einer hohen Härte gleichwohl eine hohe Zähigkeit ermöglicht.

Erfindungsgemäß wird ein Legierungskonzept verwendet, welches im Wesentlichen auf Nickel, Aluminium, Titan und Silizium als Aufhärtungselementen aufbaut.

Um die Härte, Festigkeit und die Zähigkeit der Legierung auf einem hohen Niveau in Einklang zu bringen, wurde der Fokus auf zwei Punkte gelegt, nämlich einerseits die Steigerung der Härte- und Festigkeitswerte durch eine Modifikation der Ausscheidungsdichten und -typen. Hierzu wurde erfindungsgemäß der Gehalt der ausscheidungsbildenden Elemente Aluminium und Titan erhöht.

Um die Zähigkeit zu erhöhen, wurde der Anteil des rückumgewandelten Austenits erhöht, was durch eine Erhöhung des Nickelgehalts erreicht werden konnte.

Die Erfindung betrifft somit ein Verfahren zum Herstellen eines Gegenstandes aus einem Maraging-Stahl, wobei der Gegenstand nacheinander einer Lösungsglüh- und Auslagerungs-Wärmebehandlung unterzogen wird, wobei der Stahl die folgende Zusammensetzung in M-% besitzt:
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05

Rest Eisen und erschmelzungsbedingte Verunreinigungen, wobei dass das Material in eine gewünschte Form gebracht wird und anschließend bei 900-1000°C lösungsgeglüht wird, wobei das Material für 0,5-1,5 Stunden lösungsgeglüht wird, wobei das Material nach dem Lösungsglühen bei 475°C-525°C ausgelagert wird und wobei die Auslagerungsdauer zwei bis sechs Stunden beträgt.

In einer vorteilhaften Ausführungsform ist vorgesehen, dass das Stahlmaterial im Vakuuminduktionsofen erschmolzen und mittels ESU oder VLBO umgeschmolzen und anschließend vergossen wird.

In einer vorteilhaften Ausführungsform ist vorgesehen, dass das Material nach dem Lösungsglühen und Auslagern eine Härte >50 HRC aufweist.

In einer vorteilhaften Ausführungsform ist vorgesehen, dass das Material nach dem Auslagern bei einer Temperatur von 525°C einen Gehalt an rückumgewandeltem Austenit zwischen 4 und 8 Vol-% insbesondere 5 und 7,5 Vol-% besitzt.

Ein weiterer Aspekt der Erfindung betrifft einen Maraging-Stahl, dadurch gekennzeichnet, dass er die folgende Zusammensetzung in M-% besitzt:
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05

Rest Eisen und erschmelzungsbedingte Verunreinigungen.

Ein weiterer Aspekt der Erfindung betrifft einen Gegenstand aus einem Maraging-Stahl hergestellt mit einem Verfahren nach einem der vorhergehenden Ansprüche, wobei der Stahl eine Zusammensetzung in M-% besitzt:
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05

Rest Eisen und erschmelzungsbedingte Verunreinigungen.

In einer vorteilhaften Ausführungsform ist vorgesehen, dass er eine Härte von >50 HRC und einen Anteil von rückumgewandeltem Austenit von 4 bis 8 Vol-%, insbesondere 5 bis 7,5 Vol-% besitzt.

Die Erfindung wird anhand einer Zeichnung beispielhaft erläutert. Es zeigen dabei:
- Figur 1: Den Einfluss des Titangehalts;
- Figur 2: Den Einfluss des Molybdängehalts;
- Figur 3: Einen Zeit-/Temperaturplan einer Wärmebehandlung, welche aus einem Lösen-Spülvorgang mit anschließender Luftabkühlung auf Raumtemperatur und einem Auslagerungsprozess besteht.
- Figur 4: Das Phasendiagramm von Eisen-Nickel im Gleichgewicht;
- Figur 5: Die Hysterese der Umwandlungstemperaturen von Martensit und Austenit beim Heizen und Kühlen;
- Figur 6: Tabelle 1 zeigend die chemische Zusammensetzung erfindungsgemäßer Stähle;
- Figur 7: Tabelle 2 zeigend eine weitere Zusammensetzung eines erfindungsgemäßen Pulvers;
- Figur 8: Die Härte in Abhängigkeit von der Auslagerungstemperatur für unterschiedliche Legierungen;
- Figur 9: Der Austenitgehalt abhängig von der Auslagerungstemperatur für unterschiedliche Legierungen;

Im Folgenden werden die wichtigsten Legierungselemente und deren Einfluss auf die Mikrostruktur und Eigenschaften in Maraging-Stähle und bei der Erfindung im Speziellen aufgelistet.

### Nickel (Ni):

Nickel ist das wichtigste Legierungselement in Maraging Stählen. Da der C-Gehalt in Maraging-Legierungen niedrig ist, führt die Zugabe von Ni zu Fe zur Bildung eines kubischen Fe-Ni-Martensits. Außerdem ist die Kontrolle des Ni-Gehalts wichtig, da Ni ein Austenitstabilisierendes Element ist und daher ist Ni entscheidend für die Bildung von rückumgewandeltem Austenit. Ni bildet mit zahlreichen Elementen wie Al, Ti und Mn intermetallische Ausscheidungen und spielt daher eine weitere entscheidende Rolle als ausscheidungsbildendes Element.

### Aluminium (AI):

Aluminium wird zu Maraging-Stählen als Ausscheidungselement hinzugefügt. Es erhöht die Mischkristallverfestigung und bildet, insbesondere mit Ni, intermetallischen Ausscheidungen. Ein höherer Al-Gehalt kann zur Anwesenheit von δ-Ferrit in der Mikrostruktur führen, was eine nachteilige Wirkung auf die mechanischen Eigenschaften und auf die Korrosionsbeständigkeit hat.

### Titan (Ti):

Titanium scheint eines der aktivsten Elemente in Maraging-Stählen zu sein. Es scheidet sich während des Auslagerns aus und kann als das wichtigste Legierungselement für die Bildung von Ausscheidungen in Maraging-Stählen gesehen werden. Es wurde als ausscheidungsbildendes Element in den ersten entwickelten Maraging-Stählen sowie in heutzutage komplexen Legierungssystemen verwendet.

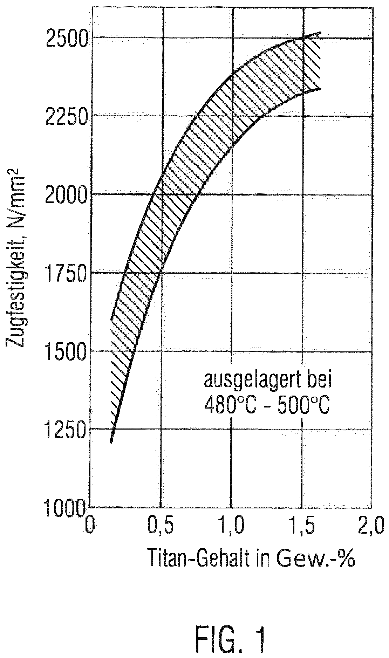

Der größte Vorteil ist die rasche Ausscheidung, so ist Titan z.B. viel aktiver als Mo in C- und T-artige Maraging-Stählen in der frühen Stadien der Ausscheidung. Der enorme Einfluss des Ti-Gehalts auf die Zugfestigkeit von 18% Ni- und Co- hältigen Maraging-Stählen kann der Abbildung 1 entnommen werden. Zusätzlich wird Ti in kleinen Mengen zu Ti-freien Maraging-Stählen beigefügt um Karbide zu bilden. Das Ziel dabei ist es den Kohlenstoff C zu binden, damit keine anderen Ausscheidungselemente Karbide bilden können.

Den Einfluss des Ti-Gehalts erkennt man in Figur 1.

### Molybdän (Mo):

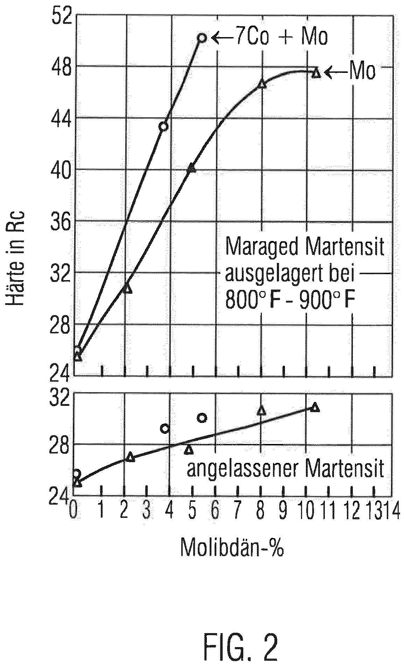

Mit zunehmendem Mo-Gehalt kann eine Zunahme der Härte nach Auslagerung beobachtet werden (Abbildung 2), da Mo mit Ni intermetallischen Verbindungen eingeht. Das Ausscheidungsverhalten von Mo wird stark von anderen Elementen beeinflusst, unter anderem besonders von Kobalt (Co). Durch die Zugabe von Co wird die Löslichkeit von Mo in der Matrix gesenkt und Mo wird dazu gezwungen Ausscheidungen zu bilden. Dies führt zu einer Erhöhung der Härte (Abbildung 2). Des Weiteren erhöht Mo auch die Mischkristallverfestigung (Abbildung 2) und verbessert die Korrosionsbeständigkeit von hoch Cr-haltigen Maraging-Stählen.

Den Einfluss des Mo-Gehalts erkennt man in Figur 2.

### Chrom (Cr):

Chrom wird hinzugefügt um die Korrosionsbeständigkeit von Maraging-Stählen zu verbessern. Dies führt zu Stählen, die zum Beispiel als Kunststoffformenstähle verwendet werden können, welche einem chemischen Angriff bei der Herstellung von Kunststoffen ausgesetzt sind. Das Zulegieren von Cr fördert die Ausscheidung der Laves-Phase. Allerdings können höhere Gehalte an Cr zur Bildung der σ-Phase führen, welche sich negativ auf die mechanischen Eigenschaften auswirkt. Darüber hinaus kann es bei Langzeitalterungen zu einer spinodalen Entmischung in Fe- reiche und Cr- reiche Phasen kommen, welche die Kerbschlagzähigkeit senkt.

### Mangan (Mn):

Um preiswerte Maraging-Stähle zu entwickeln, wurde Mn teilweise eingesetzt um das teurere Ni zu ersetzen. Mn bildet gleichmäßig mit Ni einen Mn Martensit, hat aber eine weniger austenitstabilisierende Wirkung und daher ist in Fe-Mn-Legierungen eine signifikante Menge an δ-Ferrit vorhanden. Dieser δ-Ferrit hat eine negative Auswirkung auf die mechanischen Eigenschaften und auf die Korrosionsbeständigkeit.

Des Weiteren ist bereits bekannt, dass Mn mit Fe und Ni intermetallische Verbindungen eingeht.

### Kohlenstoff (C):

Kohlenstoff ist kein Legierungselement eines Maraging-Stahls. Aufgrund der Tatsache, dass Maraging-Stähle ihre hohe Festigkeit nicht durch Karbide verliehen bekommen, wird der C-Gehalt während der Produktion des Stahls so gering wie möglich gehalten. Deshalb liegt der C-Gehalt eines Maraging-Stahl im Bereich von 1/100%.

Die Korrosionsbeständigkeit und die Schweißbarkeit verschlechtern sich, wenn Kohlenstoff Cr-Karbide in nichtrostenden Maraging-Stählen bildet. In PH 13-8 Mo Maraging-Stählen bildet C Karbide mit Mo und Cr.

### Kupfer (Cu):

Cu agiert als ausscheidungsförderndes Element in Maraging-Stählen, wobei es aber keine Verbindung mit anderen Elementen eingeht. Zu Beginn scheidet es sich mit einer kubisch raumzentrierten Struktur in der Fe Matrix aus. Während des Auslagerns entwickelt es 9R Struktur und schlussendlich bildet es ihre im Gleichgewicht befindliche kubisch flächenzentrierte Struktur aus. Die Rolle des Kupfers ist es sich rasch auszuscheiden und als Keimbildungsstelle für andere Ausscheidungen zu dienen.

### Silizium (Si):

Silizium wird üblicherweise als Verunreinigungselement in Stählen angesehen. Allerdings bildet Si in Maraging-Stählen intermetallische Phasen und im speziellen, bei Legierungen die Ti enthalten, die sogenannte Ni16Si7Ti6 G-Phase. Der Begriff G-Phase wird deshalb verwendet, weil jene Phase zum ersten Mal an Korngrenzen (grain boundaries) entdeckt wurde, dies ist bei Maraging-Stählen jedoch nicht der Fall.

Die guten mechanischen Eigenschaften von Maraging-Stählen kann man auf eine zweistufige Wärmebehandlung zurückführen.

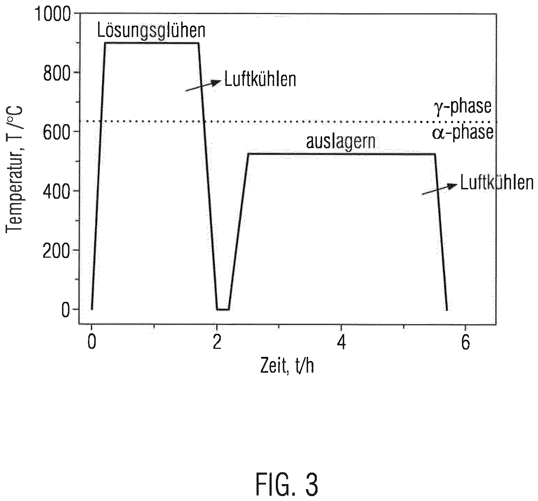

Figur 3 zeigt exemplarisch einen Zeit-Temperatur-Diagramm einer solchen Wärmebehandlung auf, welche aus einem Lösungsglühvorgang mit anschließender Luftabkühlung auf Raumtemperatur und einem Auslagerungsprozess besteht.

Wenn aus dem austenitischen Einphasenfeld nach dem Lösungsglühvorgang abgeschreckt wird, wird ein weicher aber stark verzerrter Ni-Martensit gebildet den man leicht bearbeiten und bei Bedarf kaltbearbeiten kann. Das darauffolgende Auslagern wird typischerweise in einem Temperaturbereich von 400°C bis 600°C durchgeführt. Während dem Auslagerungsprozess treten drei Reaktionen auf:
(i) Ausscheidung von intermetallischen Phasen
(ii) Erholung des Martensits
(iii) Bildung von rückumgewandelten Austenit

Die Ausscheidung von nm-großen intermetallischen Phasen ist verantwortlich für den immensen Anstieg der Festigkeit nach dem Auslagern. Maraging-Stähle weisen eine Reihe von essentiellen Vorteilen auf:
- Lediglich eine zweistufige Wärmebehandlung notwendig
- Leichtes Bearbeiten von komplexen Formen im nicht ausgelagerten Zustand möglich
- Anschließendes Härten mit minimaler Verformung

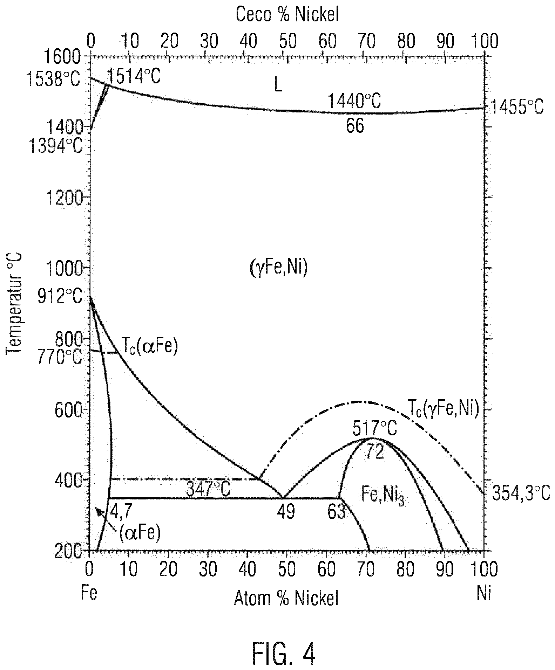

Das Phasendiagramm von Fe-Ni im Gleichgewicht ist in Figur 4 dargestellt. Daraus kann man ablesen, dass Ni die Umwandlungstemperatur von Austenit zu Ferrit senkt und das die Struktur im Gleichgewicht bei Raumtemperatur, von jenen Legierungen die mehr als einige wenige Prozent Ni beinhalten, aus Austenit und Ferrit besteht.

Allerdings wird das Material in der Praxis unter realen Abkühlbedingungen, ausgehend vom austenitischen Einphasenfeld, nicht in eine im Gleichgewicht befindliche Zusammensetzung aus Austenit und Ferrit zerfallen. Viel mehr wird der Austenit, bei weiterer Abkühlung, in einen kubischen Martensit umgewandelt.

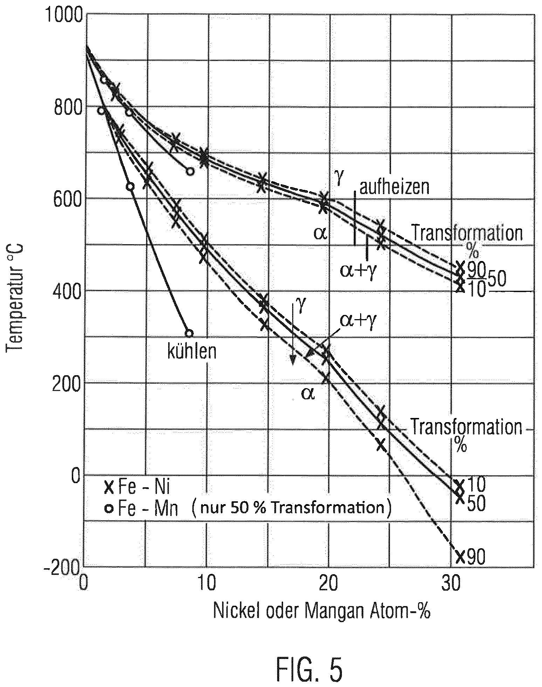

Die Alterung der martensitischen Struktur ist möglich durch den Einfluss von Ni in Maraging-Stählen, was zu einer Hysterese der Umwandlungstemperaturen von Martensit und Austenit beim Heizen und Kühlen führt (Figur 5). Mit zunehmendem Ni-Gehalt sinkt die Umwandlungstemperatur von Heizen und Kühlen. Dabei hängt die Differenz der Umwandlungstemperaturen vom Ni-Gehalt ab.

Nach dem Lösungsglühen wandelt sich das Material zu einem Martensit um, wenn man unter der Umwandlungstemperatur abkühlt. Abhängig vom Ni-Gehalt und den anderen Legierungselementen kann man einen gewissen Anteil an Austenit bei Raumtemperatur rückumwandeln. Wenn man die Mikrostruktur unter der α-γ Umwandlungstemperatur wieder erwärmt, zerfällt der Martensit in eine Gleichgewichtsstruktur aus Austenit und Ferrit. Die Geschwindigkeit dieser Rückumwandlungsreaktion hängt von der angewandten Temperatur ab. Erfreulicherweise ist diese Umwandlung bei Maraging-Stählen langsam genug damit sich Ausscheidungen der intermetallischen Phasen von der übersättigten Lösung bilden, bevor die Rückumwandlungsreaktion dominiert.

Wenn man andererseits die Legierung über der α-γ Umwandlungstemperatur erwärmt wandelt sich der Martensit durch Gleitvorgänge zurück um.

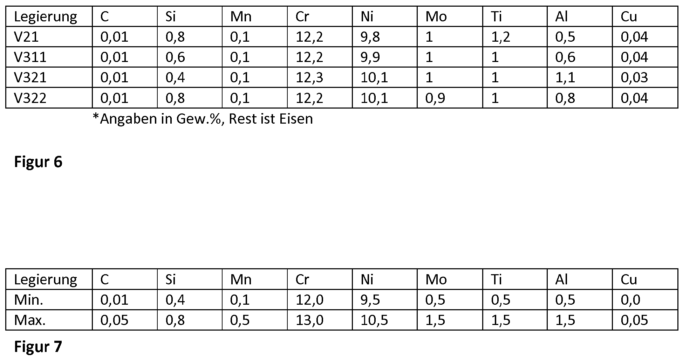

Das erfindungsgemäße Legierungskonzept basiert im Wesentlichen auf einem Konzept, das auf Ni, Al, Ti und Si als Aushärtungselemente aufbaut (Figur 6 für Beispielstähle, Figur 7 für den erfindungsgemäßen Bereich).

Um die Härte, Festigkeit und die Zähigkeit der Legierung zu steigern, wurde der Fokus der Legierungsentwicklung im Wesentlichen auf zwei Punkte gelegt:
- Eine Steigerung der Härte- und Festigkeitswerte wurde durch eine Modifikation der Ausscheidungsdichten und -typen erzielt. Dazu wurden die Gehalte der ausscheidungsbildenden Elemente Al und Ti erhöht.
- Um die Zähigkeit zu erhöhen, wurde der Anteil des rückumgewandelten Austenits erhöht. Dies konnte durch Erhöhung des Ni-Gehalts erreicht werden.

Insgesamt kann man erkennen, dass mit der erfindungsgemäßen Legierung unter Einhaltung der angegebenen Bereiche der Temperatur für das Lösungsglüh und für die Auslagerung, ein Stahlmaterial erreicht wird, welches eine hohe Härte bei einem überraschend hohen rückumgewandelten Austenitgehalt besitzt. Hierdurch ist bei der sehr hohen Härte eine hohe Zähigkeit erzielbar, sodass bei der Zähigkeit eine Mindesthöhe von 25 3 bei der Kehrschlagarbeit erzielt wird.

Erfindungsgemäß findet die Lösungsglühbehandlung bei 900-1000°C für 0,5-1,5 Stunden statt.

Das Auslagern findet bei 475°C bis 525°C für zwei bis sechs Stunden statt.

Die Erfindung wird im Detail durch folgende Beispiele näher beschrieben.

Ein Stahlmaterial mit chemischen Zusammensetzungen entsprechend Figur 6 wird im Vakuuminduktionsofen erschmolzen und gegebenenfalls mittels ESU oder VLBO umgeschmolzen und entsprechend vergossen und zu Probekörpern verarbeitet.

Das Material wird in Form dieser Probekörper in weiterer Folge hinsichtlich Gefüge, Härte-Auslagerungsverhalten und mechanischen Eigenschaften in unterschiedlichen Wärmebehandlungszuständen charakterisiert.

Die Lösungsglühung erfolgte bei 1000°C für 1h und das Auslagern wurde für 3h bei 525°c durchgeführt. Die Härte wurde im Anschluss nach der Rockwell-Methode bestimmt.

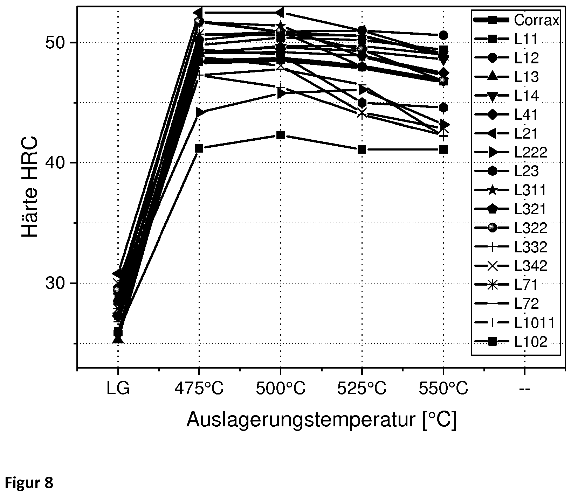

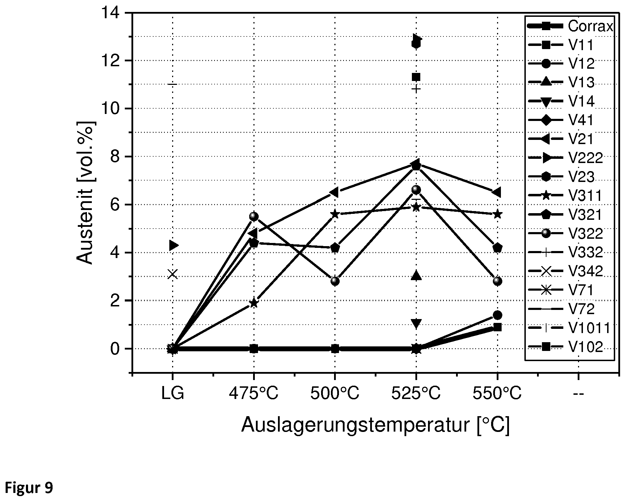

In den Figuren 8 und 9 sind die Kennwerte einer Mehrzahl von Legierungen bezüglich Härte und Zähigkeit dargestellt.

Hierbei entsprechen in beiden Figuren die Legierungen V21, V311, V321 und V322 gemäß der Tabelle in Figur 6 den erfindungsgemäßen Legierungen.

Man erkennt in Figur 8, dass die entsprechenden erfindungsgemäßen Legierungen im oberen Bereich der Härte aller Vergleichslegierungen rangieren und somit über absolut ausreichende Härteeigenschaften verfügen.

In Figur 9 ist der Austenitanteil abhängig von der Auslagerungstemperatur gezeigt. Hierbei werden unterschiedliche Anteile von rückumgewandelten Austenit erzielt, wobei der rückumgewandelte Austenit verantwortlich für die Zähigkeit des Materials ist. Man erkennt, dass die erfindungsgemäßen Legierungen allesamt, insbesondere bei einer Auslagerungstemperatur von 525°C sehr dicht beieinander liegen, wobei die Austenitanteile für die hohe Zähigkeit absolut ausreichend sind.

Vergleicht man die Vergleichslegierung erkennt man, dass es zwar Legierungen gibt, die einen höheren Austenitanteil haben, vergleicht man dies jedoch mit Figur 8 erkennt man, dass diese in der Härte zurückbleiben. Andere Legierungen haben einen deutlich geringeren Austenitanteil oder gar keinen Austenitanteil und sind in der Zähigkeit daher sehr schlecht auch wenn sie in der Härte besser sind.

Somit zeigt sich, dass die Erfindung eine besonders gelungene Kombination aus Härte und Zähigkeit ermöglicht.

## Patentansprüche

1. Verfahren zum Herstellen eines Gegenstandes aus einem Maraging-Stahl, wobei der Gegenstand nacheinander einer Lösungsglüh- und Auslagerungs-Wärmebehandlung unterzogen wird, wobei
der Stahl die folgende Zusammensetzung in M-% besitzt:
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05
Rest Eisen und erschmelzungsbedingte Verunreinigungen, wobei dass das Material in eine gewünschte Form gebracht wird und anschließend bei 900-1000°C lösungsgeglüht wird, wobei das Material für 0,5-1,5 Stunden lösungsgeglüht wird, wobei das Material nach dem Lösungsglühen bei 475°C-525°C ausgelagert wird und wobei die Auslagerungsdauer zwei bis sechs Stunden beträgt.

2. Verfahren nach Anspruch 1,
**dadurch gekennzeichnet,**
**dass** das Stahlmaterial im Vakuuminduktionsofen erschmolzen und mittels ESU oder VLBO umgeschmolzen und anschließend vergossen wird.

3. Verfahren nach einem der vorhergehenden Ansprüche,
**dadurch gekennzeichnet,**
**dass** das Material nach dem Lösungsglühen und Auslagern eine Härte >50 HRC aufweist.

4. Verfahren nach einem der vorhergehenden Ansprüche,
**dadurch gekennzeichnet,**
**dass** das Material nach dem Auslagern bei einer Temperatur von 525°C einen Gehalt an rückumgewandeltem Austenit zwischen 4 und 8 Vol-% insbesondere 5 und 7,5 Vol-% besitzt.

5. Maraging-Stahl, **dadurch gekennzeichnet, dass** er die folgende Zusammensetzung in M-% besitzt:
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05
Rest Eisen und erschmelzungsbedingte Verunreinigungen.

6. Gegenstand aus einem Maraging-Stahl hergestellt mit einem Verfahren nach einem der vorhergehenden Ansprüche, wobei der Stahl eine Zusammensetzung in M-% besitzt:
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05
Rest Eisen und erschmelzungsbedingte Verunreinigungen.

7. Gegenstand nach Anspruch 6, **dadurch gekennzeichnet, dass** er eine Härte von >50 HRC und einen Anteil von rückumgewandeltem Austenit von 4 bis 8 Vol-%, insbesondere 5 bis 7,5 Vol-% besitzt.

## Claims

1. A method for producing an article out of a maraging steel, wherein
the article is successively subjected to a solution annealing and aging heat treatment,
wherein
the steel has the following composition in M-%:
C = 0.01-0.05
Si = 0.4-0.8
Mn = 0.1-0.5
Cr = 12.0-13.0
Ni = 9.5-10.5
Mo = 0.5-1.5
Ti = 0.5-1.5
Al = 0.5-1.5
Cu = 0.0-0.05
Residual iron and smelting-induced impurities, wherein the material is formed into a desired shape and then solution annealed at 900-1000°C, wherein the material is solution annealed for 0.5-1.5 hours, wherein the material is aged at 475°C-525°C after solution annealing and wherein the ageing period is two to six hours.

2. The method according to claim 1,
**characterized in that**
the steel material is melted in the vacuum induction furnace and remelted by means of ESU or VLBO and then cast.

3. The method according to one of the preceding claims,
**characterized in that**
after the solution annealing and aging, the material has a hardness of >50 HRC.

4. The method according to one of the preceding claims,
**characterized in that**
after the aging at a temperature of 525°C, the material has a retransformed austenite content of between 4 and 8 vol.% in particular between 5 and 7.5 vol.%.

5. Maraging steel produced **characterized in that** it has the following composition in M-%:
C = 0.01-0.05
Si = 0.4-0.8
Mn = 0.1-0.5
Cr = 12.0-13.0
Ni = 9.5-10.5
Mo = 0.5-1.5
Ti = 0.5-1.5
Al = 0.5-1.5
Cu = 0.0-0.05
Residual iron and smelting-induced impurities.

6. An article composed of a maraging steel produced with a method according to one of the preceding claims, wherein the steel has a composition in M-%:
C = 0.01-0.05
Si = 0.4-0.8
Mn = 0.1-0.5
Cr = 12.0-13.0
Ni = 9.5-10.5
Mo = 0.5-1.5
Ti = 0.5-1.5
Al = 0.5-1.5
Cu = 0.0-0.05
Residual iron and smelting-induced impurities.

7. The subject of claim 6, **characterized in that** it has a hardness of >50 HRC and a percentage of retransformed austenite of 4 to 8 vol.%, in particular 5 to 7 vol.%.

## Revendications

1. Procédé de fabrication d'un objet en acier maraging, dans lequel l'objet est soumis successivement à un traitement thermique de recuit de mise en solution et de durcissement par précipitation, suite à quoi l'acier présente la composition ci-dessous, en % en masse :
C = entre 0,01 et 0,05
Si = entre 0,4 et 0,8
Mn = entre 0,1 et 0,5
Cr = entre 12,0 et 13,0
Ni = entre 9,5 et 10,5
Mo = entre 0,5 et 1,5
Ti = entre 0,5 et 1,5
Al = entre 0,5 et 1,5
Cu = entre 0,0 et 0,05,
le reste étant du fer et des impuretés associées à la fusion, où le matériau est amené dans une forme souhaitée et ensuite recuit en solution à une température comprise entre 900 et 1000 °C, où le matériau est recuit en solution pendant 0,5 à 1,5 heure, où le matériau est durci par précipitation à une température comprise entre 475 °C et 525 °C après le recuit de mise en solution, et où la durée de durcissement par précipitation est comprise entre deux et six heures.

2. Procédé selon la revendication 1, **caractérisé en ce que** le matériau d'acier est fondu dans un four à induction sous vide et refondu au moyen d'un procédé ESU (refusion sous laitier électroconducteur) ou VLBO (refusion dans un four à arc sous vide), puis coulé.

3. Procédé selon l'une des revendications précédentes, **caractérisé en ce que** le matériau présente une dureté >50 HRC après recuit de mise en solution et durcissement par précipitation.

4. Procédé selon l'une des revendications précédentes, **caractérisé en ce que** le matériau, après le durcissement par précipitation à une température de 525 °C, présente une teneur en austénite retransformée comprise entre 4 et 8 % en volume, en particulier comprise entre 5 et 7,5 % en volume.

5. Acier maraging, **caractérisé en ce qu'**il présente la composition ci-dessous, en % en masse :
C = entre 0,01 et 0,05
Si = entre 0,4 et 0,8
Mn = entre 0,1 et 0,5
Cr = entre 12,0 et 13,0
Ni = entre 9,5 et 10,5
Mo = entre 0,5 et 1,5
Ti = entre 0,5 et 1,5
Al = entre 0,5 et 1,5
Cu = entre 0,0 et 0,05
le reste étant du fer et des impuretés associées à la fusion.

6. Objet en acier maraging fabriqué selon un procédé selon l'une des revendications précédentes, dans lequel l'acier présente la composition ci-dessous, en % en masse :
C = entre 0,01 et 0,05
Si = entre 0,4 et 0,8
Mn = entre 0,1 et 0,5
Cr = entre 12,0 et 13,0
Ni = entre 9,5 et 10,5
Mo = entre 0,5 et 1,5
Ti = entre 0,5 et 1,5
Al = entre 0,5 et 1,5
Cu = entre 0,0 et 0,05
le reste étant du fer et des impuretés associées à la fusion.

7. Objet selon la revendication 6, **caractérisé en ce qu'**il présente une dureté > 50 HRC et une proportion d'austénite retransformée comprise entre 4 et 8 % en volume, en particulier comprise entre 5 et 7,5 % en volume.
